(19) Europäisches Patentamt
European Patent Office
Office européen des brevets

(11) EP 4 332 174 A1

(12) EUROPEAN PATENT APPLICATION
published in accordance with Art. 153(4) EPC

(43) Date of publication:
**06.03.2024 Bulletin 2024/10**

(21) Application number: **23799481.9**

(22) Date of filing: **28.04.2023**

(51) International Patent Classification (IPC):
***C08L 101/02*** *(2006.01)* ***C08G 81/00*** *(2006.01)*

(52) Cooperative Patent Classification (CPC):
**C08G 81/00; C08L 101/02**

(86) International application number:
**PCT/JP2023/016922**

(87) International publication number:
**WO 2023/214551 (09.11.2023 Gazette 2023/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.05.2022 JP 2022076350**

(71) Applicants:
- **The University of Tokyo**
  **Bunkyo-ku, Tokyo 113-8654 (JP)**
- **Gellycle Co., Ltd.**
  **Tokyo 113-0033 (JP)**

(72) Inventors:
- **SAKAI Takamasa**
  **Tokyo 113-8654 (JP)**
- **NAITO Mitsuru**
  **Tokyo 113-8654 (JP)**
- **KATASHIMA Takuya**
  **Tokyo 113-8654 (JP)**
- **MASUI Kosuke**
  **Tokyo 113-0033 (JP)**
- **KAMATA Hiroyuki**
  **Tokyo 113-0033 (JP)**

(74) Representative: **Symbiosis IP Limited**
**The Innovation Centre**
**217 Portobello**
**Sheffield, South Yorkshire S1 4DP (GB)**

# (54) POLYMER MATERIAL HAVING PHASE SEPARATION STRUCTURE

(57) [Object]

An object of the present invention is to provide a novel artificial slime-like polymer material capable of controlling flow characteristics without changing a chemical composition such as a main chain skeleton or a solvent constituting the polymer material.

[Solution]

It is found that a slime-like polymer material in which liquid-liquid phase separation is induced can be provided and fluidity of the polymer material can be controlled by adding a polymer that does not react with a polymer unit serving as a basic skeleton constituting the polymer material in addition to the polymer unit.

*FIG. 1*

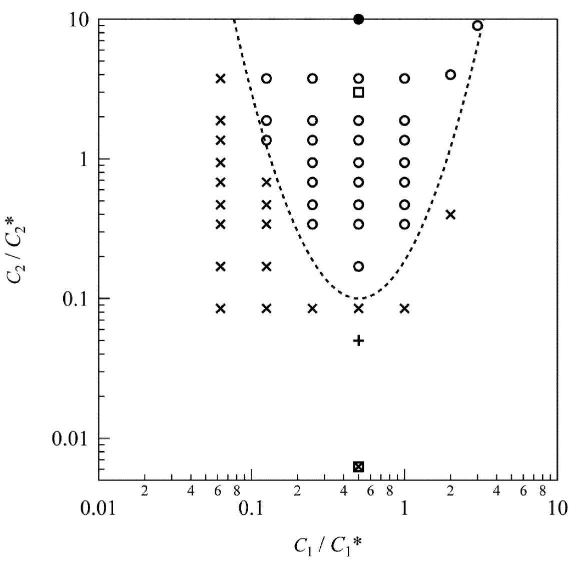


EP 4 332 174 A1

## Description

### Technical Field

The present invention relates to an associative polymer material having a phase-separated structure.

### Background Art

A general slime is a substance in which polymers form an association point by a reversible interaction (an ionic bond, a hydrophobic functional group, a dynamic covalent bond, or the like) through another compound and the polymers form a transient three-dimensional network structure in a solvent such as water. Since the association point has a finite life, the slime is a liquid material having both viscosity and elasticity, unlike a polymer gel having a similar composition. The polymer gel is a solid material having a characteristic of exhibiting a constant stress in an equilibrium state when a constant strain such as stress relaxation measurement is applied and time development of stress is observed. Conversely, a polymer material that does not have the characteristic is referred to as a non-gelled polymer material.

Therefore, the slime-like polymer material has been used as a rheology control agent for foods and cosmetics, and studied as an injectable in-vivo tamponade or drug carrier (for example, Non Patent Literatures 1 and 2). However, a conventional slime-like polymer material exhibits flow curability (shear thinning) that causes an increase in viscosity with respect to shearing, which hinders injection with an injector or the like.

### Citation List

### Non Patent Literature

Non Patent Literature 1: Rainer G et al. Br J Ophthalmol, 85:139-142, 2001

Non Patent Literature 2: Ooki T et al. Developmental Cell, 49, 590-604, 2019

### Summary of Invention

### Technical Problem

Therefore, an object of the present invention is to provide a novel artificial slime-like polymer material capable of controlling flow characteristics without changing a chemical composition such as a main chain skeleton or a solvent constituting the polymer material.

### Solution to Problem

As a result of intensive studies to solve the above problems, the present inventors have found that it is possible to provide a slime-like polymer material in which liquid-liquid phase separation is induced and to control fluidity thereof by adding a polymer that does not react with a polymer unit serving as a basic skeleton constituting the polymer material in addition to the polymer unit, thereby completing the present invention.

That is, in an aspect, the present invention provides:

<1> A non-gelled polymer material containing a solvent,

in which the polymer material has a three-dimensional structure in which a first region in which a plurality of polymer units are densely present by linking the plurality of polymer units and a second region in which the polymer units are sparsely present are present in a phase-separated state,

the polymer units include a first polymer unit having a total of two or more boronic acid-containing groups at a terminal and a second polymer unit having a total of two or more polyol groups at a terminal,

the polymer material further contains a polymeric additive having neither a boronic acid-containing group nor a polyol group at a terminal,

a total concentration ($c_1$) of the first and second polymer units in the polymer material is 1 to 200 g/L, and an overlapping concentration ($c_1^*$) of the polymer units is in a range of 0.02 to 5 times, and

a concentration ($c_2$) of the polymeric additive in the polymer material satisfies the following relational expression with respect to an overlapping concentration ($c_2^*$) of the polymeric additive:

[Math. 1]

$$\log\left(\frac{c_2}{c_2*}\right) > 3\left(\log\left(\frac{c_1}{c_1*}\right) + 0.3\right)^2 - 1$$

;

<2> The polymer material according to <1>, in which the solvent is water and the polymer unit is a hydrophilic polymer;
<3> The polymer material according to <1>, in which the polymer unit has a polyethylene glycol skeleton or a polyvinyl skeleton;
<4> The polymer material according to <1>, in which the polymer units are each independently a 2-branched, 3-branched, 4-branched, or 8-branched polyethylene glycol;
<5> The polymer material according to <1>, in which the polymer unit has a molecular weight (Mw) of $5 \times 10^3$ to $1 \times 10^5$;
<6> The polymer material according to <1>, in which the boronic acid-containing group is an aryl boronic acid which may be substituted with a halogen atom;
<7> The polymer material according to <1>, in which the polyol group has a ring-opened structure of a sugar derivative;
<8> The polymer material according to <1>, in which the polymeric additive is a hydrophilic polymer or a biopolymer;
<9> The polymer material according to <1>, in which the polymeric additive has a polyethylene glycol skeleton or a polyvinyl skeleton;
<10> The polymer material according to <1>, in which the polymeric additive is a polymer having the same type of main chain skeleton as the polymer unit; and
<11> The polymer material according to <1>, in which the polymeric additive has a molecular weight (Mw) of $1 \times 10^3$ to $1 \times 10^8$.

In another aspect, the present invention provides:

<12> A kit for forming the polymer material according to any one of <1> to <11>, the kit

including at least a composition A containing a first polymer unit having a total of two or more boronic acid-containing groups at a terminal and a composition B containing a second polymer unit having a total of two or more polyol groups at a terminal, and
including a container separately storing a solution A containing a first polymer unit having a total of two or more boronic acid-containing groups at a terminal and a solution B containing a second polymer unit having a total of two or more polyol groups at a terminal,
in which the kit further includes a polymeric additive having neither a boronic acid-containing group nor a polyol group at a terminal in at least one of the solutions A and B, or the kit further includes a container separately storing a solution C containing the polymeric additive,
a total concentration ($c_1$) of the first and second polymer units in a solution in which the solutions A and B (and the solution C, when present) are mixed is 1 to 200 g/L, and an overlapping concentration ($c_1$*) of the polymer units is in a range of 0.02 to 5 times, and
a concentration ($c_2$) of the polymeric additive in the solution in which the solutions A and B (and the solution C, when present) are mixed satisfies the following relational expression with respect to an overlapping concentration ($c_2$*) of the polymeric additive:

[Math. 2]

$$\log\left(\frac{c_2}{c_2\,*}\right) > 3\left(\log\left(\frac{c_1}{c_1\,*}\right) + 0.3\right)^2 - 1$$

;

and

<13> A production method of the polymer material according to any one of <1> to <11>, the production method including:

preparing a polymer solution by mixing a first polymer unit having a total of two or more boronic acid-containing groups at a terminal and a second polymer unit having a total of two or more polyol groups at a terminal with a

solvent; and

adding a polymeric additive having neither a boronic acid-containing group nor a polyol group at a terminal so that the following relational expression is satisfied:

[Math. 3]

$$\log\left(\frac{c_2}{c_2*}\right) > 3\left(\log\left(\frac{c_1}{c_1*}\right) + 0.3\right)^2 - 1$$

in which a total concentration of the first and second polymer units in the polymer material is $c_1$, an overlapping concentration of the polymer units is $c_1$*, a concentration of the polymeric additive is $c_2$, and an overlapping concentration of the polymeric additive is $c_2$*.

Advantageous Effects of Invention

A conventional slime exhibits flow curability that causes an increase in viscosity with respect to shearing, which has been a problem during injection with an injector or the like. However, the polymer material of the present invention can freely control flow characteristics by inducing liquid-liquid phase separation. Therefore, the polymer material of the present invention can be applied to various fields.

Brief Description of Drawings

Fig. 1 is a phase diagram of a phase separation behavior when a slime concentration and an added polymer concentration are used as variables, in which both concentrations are normalized by an overlapping concentration C*, and Examples 1 to 3: results of mixing linear PEG with slime (o: phase-separated structure formation, ×: single phase without phase separation), Example 4: results of mixing linear polyvinyl alcohol with slime (□: phase-separated structure formation, +: single phase without phase separation), and Example 5: results of mixing linear hyaluronic acid with slime (●: phase-separated structure formation, +: single phase without phase separation) are illustrated.

Fig. 2 is an observation image of a sample subjected to fluorescence modification with a confocal microscope (left: single phase, right: phase separation Example 2).

Fig. 3 is a graph showing a strain rate dependency of viscosity (◦: conventional slime material, ▲□●: part of Example 3).

Mode for Carrying Out the Invention

Hereinafter, embodiments of the present invention will be described. The scope of the present invention is not limited to these explanations, and examples other than the following examples may be modified and implemented as appropriate without departing from the spirit of the present invention.

1. Polymer material of present invention

A polymer material of the present invention is a slime-like associative polymer which is not gelled (that is, a non-gelled state), and is an associative polymer material having a three-dimensional structure in which two phases having different polymer concentrations are present in a phase-separated state, the two phases including a concentrated phase (first region) in which a plurality of polymer units are densely present by linking the plurality of polymer units and a dilute phase (second region) in which the polymer units are sparsely present. In addition, the present invention is characterized in that liquid-liquid phase separation is induced by adding a polymeric additive different from the polymer unit at a predetermined concentration, and flowability of the polymer material can be controlled.

Since the polymer material has such a unique phase-separated structure, the polymer material of the present invention further satisfies the following requirements:

1) The polymer units constituting the polymer material include a first polymer unit having a total of two or more boronic acid-containing groups at a terminal and a second polymer unit having a total of two or more polyol groups at a terminal;

2) The polymer material further contains a polymeric additive having neither a boronic acid-containing group nor a polyol group at a terminal;

3) A total concentration ($c_1$) of the first and second polymer units is 1 to 200 g/L, and an overlapping concentration ($c_1$*) of the polymer units is in a range of 0.02 to 5 times; and

4) A concentration ($c_2$) of the polymeric additive satisfies the following relational expression with respect to an overlapping concentration ($c_2$*) of the polymeric additive:

[Math. 4]

$$\log\left(\frac{c_2}{c_2*}\right) > 3\left(\log\left(\frac{c_1}{c_1*}\right) + 0.3\right)^2 - 1$$

The polymer material of the present invention is characterized in that a three-dimensional network structure and a porous structure are formed by this phase separation, and the network size is on the order of um. Here, the first region is referred to as a "concentrated phase" in the relative meaning that the concentration (density) of the polymer units present in the first region is larger than the density in the second region. Preferably, the first region has a concentration (density) of about 3 times or more that of the second region.

Hereinafter, the polymer units constituting the polymer material of the present invention and the characteristics of the polymer material will be described in more detail.

(1-1) Polymer unit

The polymer units constituting the polymer material of the present invention can form a non-gelled polymer material by being linked to each other, and more specifically, in the final polymer material, the polymer units are polymers that can form an associate having a network structure, in particular, a three-dimensional network structure by being linked via a chemical bond by an equilibrium reaction. Such polymer units are preferably hydrophilic polymers. As the hydrophilic polymer, a polymer having affinity with water known in the art can be used, and a biocompatible polymer having a polyalkylene glycol skeleton or a polyvinyl skeleton is preferably used.

Examples of the polymer having a polyalkylene glycol skeleton preferably include polymer species having a plurality of branches of a polyethylene glycol skeleton, and in particular, a 2-branched, 3-branched, 4-branched, or 8-branched polyethylene glycol is preferable. A polymer material composed of a 4-branched polyethylene glycol skeleton is generally known as a Tetra-PEG polymer material, and it is known that a network structure network is constructed by an AB-type cross-end coupling reaction between 4-branched polymers each having two or more kinds of functional groups capable of reacting with each other at terminals (Matsunaga et al., Macromolecules, Vol. 42, No. 4, pp. 1344-1351, 2009). In addition, the Tetra-PEG polymer material can be easily prepared in situ by simple two-liquid mixing of the respective polymer solutions, and it is also possible to control the polymer materialization time by adjusting a pH and ionic strength during preparation of the polymer material. In addition, since the polymer material contains PEG as a main component, the polymer material is also excellent in biocompatibility.

Examples of the hydrophilic polymer having a polyvinyl skeleton include a polyalkyl methacrylate such as polymethyl methacrylate, a polyacrylate, a polyvinyl alcohol, a poly N-alkyl acrylamide, and a polyacrylamide.

The hydrophilic polymer has a weight average molecular weight (Mw) in a range of $5 \times 10^3$ to $1 \times 10^5$, and preferably in a range of $1 \times 10^4$ to $5 \times 10^4$.

The hydrophilic polymer used in the present invention is a combination of a first polymer unit having a total of two or more boronic acid-containing groups at a side chain or a terminal and a second polymer unit having a total of two or more polyol groups at a side chain or a terminal. Here, the total of the boronic acid-containing groups and the polyol groups is preferably 5 or more. It is more preferable that these functional groups are present at the terminal. For example, in a case where the first polymer unit has a 2-branched, 3-branched, 4-branched, or 8-branched structure, it preferably has a boronic acid-containing group at each branched terminal, and in a case where the second polymer unit has a 2-branched, 3-branched, 4-branched, or 8-branched structure, it preferably has a polyol group at each branched terminal.

When the polymer unit has such a boronic acid-containing group and a polyol group, as exemplified in the following equilibrium reaction formula, a boronic acid site and an OH group of a polyol chemically react with each other to obtain the polymer material of the present invention having a structure in which polymer units are linked and associated with each other. Note that specific structures of the boronic acid-containing group and the polyol group shown in the reaction formula are merely examples and are not limited thereto, and other types of boronic acid-containing groups and polyol groups may be used as described below.

[Math. 5]

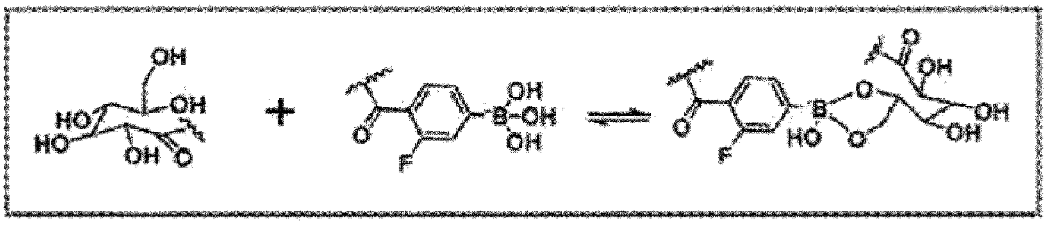

Diol group Boronic acid-containing group

The boronic acid-containing group present in the first polymer unit is not particularly limited as long as it has a structure having a boronic acid, and can be, for example, an aryl boronic acid, and preferably an aryl boronic acid which may be substituted with a halogen atom. As the aryl boronic acid, phenylboronic acid is preferable. The boronic acid-containing groups may be the same as or different from each other, and are preferably the same as each other. When the functional groups are the same as each other, reactivity with the polyol group becomes uniform, and a polymer material having a uniform structure is easily obtained.

The polyol group present in the second polymer unit is not particularly limited as long as it is a functional group having two or more hydroxyl groups (OH groups), such as 1,2-diol and 1,3-diol, may be a sugar alcohol having a structure derived from a sugar, and preferably, may have a ring-opened structure of a sugar derivative. Such a sugar may be any of a monosaccharide, a disaccharide, and a polysaccharide, and can typically be a monosaccharide such as glucose or fructose. In addition, the polyol group may be an aromatic polyol group or an aliphatic polyol group, and may be a polyol group in which one or more carbons in the molecule are substituted with a hetero atom. The polyol groups may be the same as or different from each other, and are preferably the same as each other. When the functional groups are the same as each other, reactivity with the boronic acid-containing group becomes uniform, and a polymer material having a uniform structure is easily obtained.

Preferred non-limiting specific examples of the first polymer unit include, for example, a compound represented by the following Formula (I) having four branches of a polyethylene glycol skeleton and having a boronic acid-containing group at each terminal.

[Chem. 1]

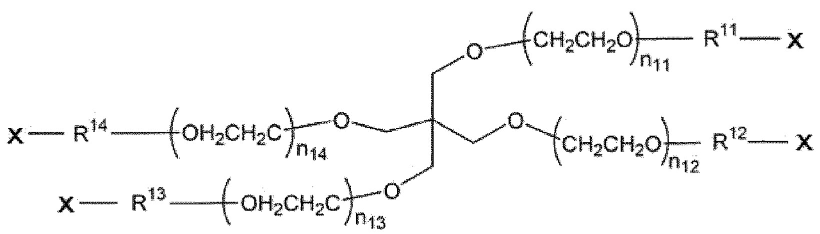

(I)

In Formula (I), X is a boronic acid-containing group, and in a preferred embodiment, X can be a phenylboronic acid-containing group or a fluorophenylboronic acid-containing group having the following structure (in the partial structure, the wavy line portion is a linking portion of $R^{11}$ to $R^{14}$) .

[Chem. 2]

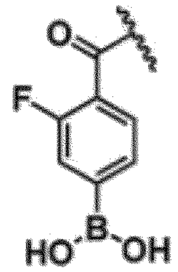

PEG-FPBA 、

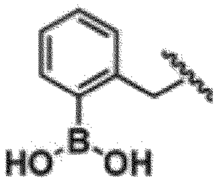

PEG-APBA 、

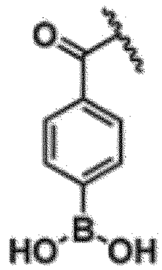

PEG-PBA 、

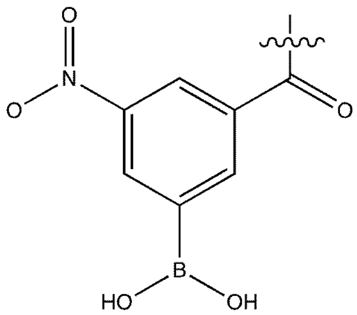

、

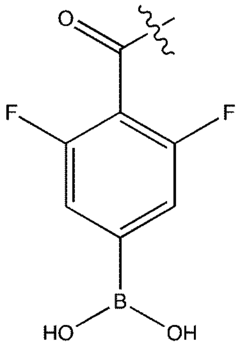

、

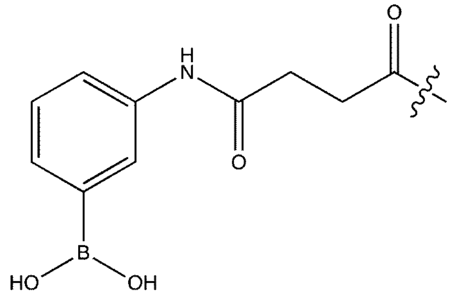

In Formula (I), $n_{11}$ to $n_{14}$ may be the same as or different from each other. As the values of $n_{11}$ to $n_{14}$ are closer, a uniform three-dimensional structure can be obtained, and the strength becomes higher. Therefore, in order to obtain a high-strength polymer material, $n_{11}$ to $n_{14}$ are preferably the same each other. When the values of $n_{11}$ to $n_{14}$ are too high, the strength of the polymer material becomes weak, and when the values of $n_{11}$ to $n_{14}$ are too low, the polymer material is hardly formed due to three-dimensional hindrance of the compound. Therefore, examples of $n_{11}$ to $n_{14}$ include an integer value of 25 to 250, and the integer value is preferably 35 to 180, more preferably, 50 to 115, and particularly preferably, 50 to 60.

In Formula (I), $R^{11}$ to $R^{14}$ are the same as or different from each other, and each represent a linker moiety linking a functional group and a core moiety. $R^{11}$ to $R^{14}$ may be the same as or different from each other, and are preferably the same as each other in order to prepare a high-strength polymer material having a uniform three-dimensional structure. $R^{11}$ to $R^{14}$ each represent a direct bond, a $C_1$-$C_7$ alkylene group, a $C_2$-$C_7$ alkenylene group, $-NH-R^{15}-$, $-CO-R^{15}-$, $-R^{16}-O-R^{17}-$, $-R^{16}-NH-R^{17}-$, $-R^{16}-CO_2-R^{17}-$, $-R^{16}-CO_2-NH-R^{17}-$, $-R^{16}-CO-R^{17}-$, or $-R^{16}-CO-NH-R^{17}-$. Here, $R^{15}$ represents a $C_1$-$C_7$ alkylene group. $R^{16}$ represents a $C_1$-$C_3$ alkylene group. $R^{17}$ represents a $C_1$-$C_5$ alkylene group.

Here, the "$C_1$-$C_7$ alkylene group" means an alkylene group having one or more and seven or fewer carbon atoms which may have a branch, and means a linear $C_1$-$C_7$ alkylene group or a $C_2$-$C_7$ alkylene group having one or two or more branches (the number of carbon atoms having the branch is 2 or more and 7 or less) . Examples of the $C_1$-$C_7$ alkylene group include a methylene group, an ethylene group, a propylene group, and a butylene group. Examples of the $C_1$-$C_7$ alkylene group include $-CH_2-$, $-(CH_2)_2-$, $-(CH_2)_3-$, $-CH(CH_3)-$, $-(CH_2)_3-$, $-(CH(CH_3))_2-$, $-(CH_2)_2-CH(CH_3)-$, $-(CH_2)_3-CH(CH_3)-$, $-(CH_2)_2-CH(C_2H_5)-$, $-(CH_2)_6-$, $-(CH_2)_2-C(C_2H_5)_2-$, and $-(CH_2)_3C(CH_3)_2CH_2-$.

The "$C_2$-$C_7$ alkenylene group" is a linear or branched alkenylene group having 2 to 7 carbon atoms and one or two or more double bonds in the chain, and examples thereof include a divalent group having a double bond formed by excluding 2 to 5 hydrogen atoms of adjacent carbon atoms from the alkylene group.

On the other hand, preferred non-limiting specific examples of the second polymer unit include, for example, a compound represented by the following Formula (II) having four branches of a polyethylene glycol skeleton and having a polyol group at each terminal.

[Chem. 3]

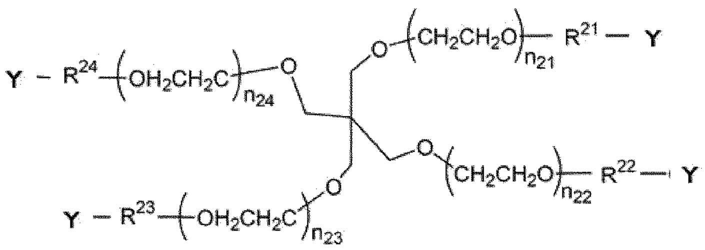

(II)

In Formula (I), Y is a polyol group, and in a preferred embodiment, Y can be a group having the following structure (in the partial structure, the wavy line portion is a linking portion of $R^{21}$ to $R^{24}$) .

[Chem. 4]

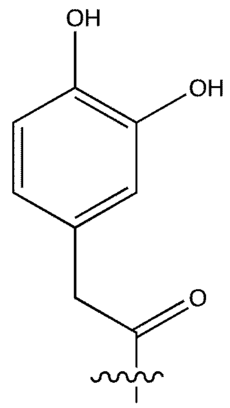

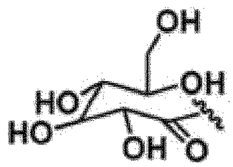

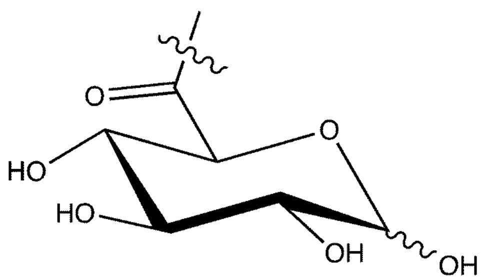

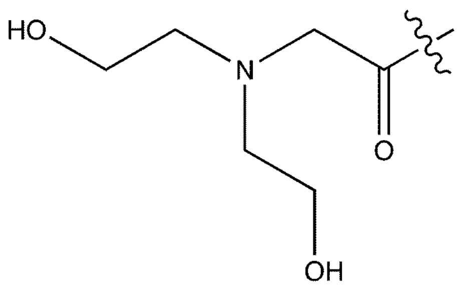

In Formula (II), $n_{21}$ to $n_{24}$ may be the same as or different from each other. As the values of $n_{21}$ to $n_{24}$ are closer, the polymer material can have a uniform three-dimensional structure and has high strength, and thus it is preferable that the values are the same as each other. When the values of $n_{21}$ to $n_{24}$ are too high, the strength of the polymer material becomes weak, and when the values of $n_{21}$ to $n_{24}$ are too low, the polymer material is hardly formed due to three-dimensional hindrance of the compound. Therefore, examples of $n_{21}$ to $n_{24}$ include an integer value of 5 to 300, and the integer value is preferably 20 to 250, more preferably, 30 to 180, still more preferably 45 to 115, and particularly preferably, 45 to 55.

In Formula (II), $R^{21}$ to $R^{24}$ are linker moieties linking a functional group and a core moiety. $R^{21}$ to $R^{24}$ may be the same as or different from each other, and are preferably the same as each other in order to prepare a high-strength polymer material having a uniform three-dimensional structure. In Formula (II), $R^{21}$ to $R^{24}$ are the same as or different from each other, and each represent a direct bond, a $C_1$-$C_7$ alkylene group, a $C_2$-$C_7$ alkenylene group, $-NH-R^{25}-$, $-CO-R^{25}-$, $-R^{26}-O-R^{27}-$, $-R^{26}-NH-R^{27}-$, $-R^{26}-CO_2-R^{27}-$, $-R^{26}-CO_2-NH-R^{27}-$, $-R^{26}-CO-R^{27}-$, or $-R^{26}-CO-NH-R^{27}-$. Here, $R^{25}$ represents a $C_1$-$C_7$ alkylene group. $R^{26}$ represents a $C_1$-$C_3$ alkylene group. $R^{27}$ represents a $C_1$-$C_5$ alkylene group.

In the present specification, the alkylene group and the alkenylene group may have one or more arbitrary substituents. Examples of the substituent include, but are not limited to, an alkoxy group, a halogen atom (which may be a fluorine atom, a chlorine atom, a bromine atom, or an iodine atom), an amino group, a mono- or di-substituted amino group, a substituted silyl group, an acyl group, and an aryl group, in the polymer material. In a case where the alkyl group has two or more substituents, these substituents may be the same as or different from each other. The same applies to alkyl moieties of other substituents including alkyl moieties (for example, an alkyloxy group, an aralkyl group,

and the like).

In addition, in the present specification, in a case where a certain functional group is defined as "which may have a substituent", the type of substituent, a substitution position, and the number of substituents are not particularly limited, and in a case where a certain functional group has two or more substituents, these substituents may be the same as or different from each other. Examples of the substituent include, but are not limited to, an alkyl group, an alkoxy group, a hydroxyl group, a carboxyl group, a halogen atom, a sulfo group, an amino group, an alkoxycarbonyl group, and an oxo group, in the polymer material. Substituents may be further present in these substituents.

The total concentration ($c_1$) of the first and second polymer units is 1 to 200 g/L, and preferably 5 to 100 g/L. At the same time, the total concentration $c_1$ is in a range of 0.02 to 3 times, and preferably in a range of 0.1 to 2 times the overlapping concentration ($c_1$*) of the polymer units.

Here, the "overlapping concentration" (it is also called an "overlap concentration") is a concentration at which polymers in a solvent begin to spatially come into contact with each other, and the overlap concentration c* is generally represented by the following expression.

[Math. 6]

$$c^* = 3M_w / (4\pi \cdot \alpha \cdot N_A \cdot R_g{}^3)$$

(In the expression, $M_w$ is a weight average molecular weight of a polymer, $\alpha$ is a relative density of a solvent, $N_A$ is Avogadro's constant, and $R_g$ is a radius of gyration of the polymer.)

For a calculation method of the overlap concentration c*, for example, Polymer Physics (written by M. Rubinstein, R.Colby) can be referred to. Specifically, the overlap concentration c* can be determined by measuring a viscosity of a dilute solution using the Flory-Fox equation.

(1-2) Polymeric additive

The polymer material of the present invention further contains a polymer component different from the first and second polymer units, that is, a polymeric additive having neither the boronic acid-containing group nor the polyol group at a terminal. As described above, such a polymeric additive is added at a predetermined concentration, such that a slime-like polymer material in which liquid-liquid phase separation is induced is obtained.

The polymeric additive can be preferably a hydrophilic polymer or a biopolymer, and examples thereof include polyethylene glycol or polyethylene oxide, polyvinyl alcohol, sodium hyaluronate, sodium polyacrylate, and sodium polyvinyl sulfonate. Preferably, the polymeric additive is a polymer having a polyethylene glycol skeleton or a polyvinyl skeleton.

In a preferred aspect, the polymeric additive can be a polymer having the same type of main chain skeleton as the first and second polymer units. However, the present invention is not limited thereto, and a polymer having different main chain skeletons can also be used. For example, as shown in Examples described below, in a case where the first and second polymer units have a polyethylene glycol skeleton, a slime-like polymer having a phase-separated structure can be obtained by using polyvinyl alcohol or sodium hyaluronate as a polymeric additive.

In addition, the concentration ($c_2$) of the polymeric additive in the polymer material satisfies the following relational expression with respect to the overlapping concentration ($c_2$*) of the polymeric additive:

[Math. 7]

$$\log\left(\frac{c_2}{c_2*}\right) > 3\left(\log\left(\frac{c_1}{c_1*}\right) + 0.3\right)^2 - 1$$

By setting the concentration of the polymeric additive to a range satisfying such a relational expression, liquid-liquid phase separation is induced, and fluidity of a final polymer material can be appropriately controlled.

The polymeric additive typically has a weight average molecular weight (Mw) in a range of $1 \times 10^3$ to $1 \times 10^8$, and preferably in a range of $1 \times 10^4$ to $1 \times 10^7$.

(1-3) Physical properties and the like of polymer material

The polymer material of the present invention contains the polymeric additive at a predetermined concentration, such that the polymer material has a structure in which liquid-liquid phase separation is induced, and has an excellent

flow softening property. That is, the polymer material of the present invention exhibits a behavior in which the viscosity is attenuated with an increase in strain rate in a low strain rate region. A phenomenon in which a decrease in viscosity is observed with respect to such a strain rate is generally called "shear thinning". The shear thinning means that the dependence of viscosity on the strain rate is negative. For example, when shear thinning occurs in a region where the strain rate is as low as 1 $s^{-1}$, the polymer material can be easily injected with an injector, a syringe, or the like.

In general, the shear thinning property of the polymer material can be evaluated by the dependence of the viscosity ($\eta$) on the strain rate ($\gamma$). More specifically, the polymer material of the present invention preferably has an exponent value $\alpha$ of the viscosity ($\eta$) to the strain rate "$\eta$ ($\gamma$) = $A\gamma^{\alpha}$" at a strain rate ($\gamma$) of 0.01 to 10 $s^{-1}$ is -1 to 0, and more preferably -0.5 to 0.

Such a flow softening property is a property that has not been realized by a conventional slime-like polymer material.

The polymer material of the present invention contains a solvent, and has a polymer content of 200 g/L or less, preferably 150 g/L or less, and more preferably, 100 g/L or less. A lower limit of the polymer content is not particularly limited, but the lower limit is preferably 5 g/L or more, from the viewpoint of obtaining desired physical properties such as a viscosity.

The polymer material of the present invention has a porous structure on the order of um due to the phase-separated structure. Specifically, a mesh size constituted by the first region can be a size of 1 to 500 $\mu$m, and preferably 10 to 100 um. The mesh size means a length of a long side in a mesh unit (that is, a hole) in which an outer periphery is formed by the first region that is the concentrated phase. Alternatively, in a case where the mesh unit is substantially circular, the mesh unit can have a length of a diameter thereof. The second region that is the dilute phase and/or the solvent is present inside the mesh unit.

Typically, based on the entire gel containing the solvent, the first region that is the concentrated phase has a polymer concentration of 1 to 20 wt%, and the second region that is the dilute phase has a polymer concentration of 0 to 3 wt%. Preferably, the first region has a polymer concentration of 1 to 10 wt%, and the second region has a polymer concentration of 0.01 to 2 wt%.

As the solvent contained in the polymer material of the present invention, any solvent can be used as long as an associate formed by the polymer unit is dissolved, and typically, water or an organic solvent can be used. As the organic solvent, alcohols such as ethanol and a polar solvent such as DMSO can be used. Preferably, the solvent is water.

The polymer material of the present invention can be typically produced by mixing a raw material containing a first polymer unit, a raw material containing a second polymer unit, and a polymeric additive. In a case where a solution containing a polymer unit is used as a raw material, a concentration, addition rate, mixing rate, and mixing ratio of each solution are not particularly limited, and can be appropriately adjusted by those skilled in the art. As described above, water, alcohols such as ethanol, DMSO, and the like can be used as the solvent for such a solution. In a case where the solution is an aqueous solution, an appropriate pH buffer such as a phosphate buffer can be used. Preferably, the polymer material of the present invention can be prepared by using a kit described below.

(1-3) Kit and production method

From a different viewpoint, the present invention relates to a kit for forming the polymer material and a production method.

Such a kit includes a container separately storing a solution A containing a first polymer unit having a total of two or more boronic-acid containing groups at a terminal and a solution B containing a second polymer unit having a total of two or more polyol groups at a terminal, and in addition,
the kit further includes:

1) a polymeric additive having neither a boronic acid-containing group nor a polyol group at a terminal in at least one of the solutions A and B, or
2) a container separately storing a solution C containing the polymeric additive having neither a boronic acid-containing group nor a polyol group at a terminal.

Here, the polymer units and the polymeric additive in the solutions A and B (and the solution C, when present) are set in the following concentration ranges.

That is, the total concentration ($c_1$) of the first and second polymer units in the solution in which the solutions A and B (and the solution C, when present) are mixed is 1 to 200 g/L, and the overlapping concentration ($c_1$*) of the polymer units is in a range of 0.02 to 5.

In addition, the concentration ($c_2$) of the polymeric additive in the solution in which the solutions A and B (and the solution C, when present) are mixed satisfies the following relational expression with respect to the overlapping concentration ($c_2$*) of the polymeric additive:

[Math. 8]

$$\log\left(\frac{c_2}{c_2\,*}\right) > 3\left(\log\left(\frac{c_1}{c_1\,*}\right) + 0.3\right)^2 - 1$$

Therefore, the polymer material of the present invention described above can be obtained in-situ by mixing the solutions A and B (and the solution C, when present). The details of the types and the like of the first and second polymer units and the polymeric additive are as described above.

The solvent in the polymer solutions A, B, and C is water, and in some cases, may be a mixed solvent containing alcohols such as ethanol and other organic solvents. Preferably, these polymer solvents are aqueous solutions using water as a single solvent. Volumes of the respective polymer solutions can be appropriately adjusted according to an area, complexity of a structure, and the like of an affected part, and each are typically in a range of 0.1 to 20 ml, and preferably, 1 to 10 ml.

A pH of each polymer solution is typically in a range of 4 to 8, and preferably, in a range of 5 to 7. For adjusting the pH of the polymer solution, a pH buffer known in the art can be used. For example, the pH can be adjusted to the above range by using a citric acid-phosphate buffer (CPB) and changing a mixing ratio of citric acid and disodium hydrogen phosphate.

As a means for mixing these polymer solutions, for example, a two-liquid mixing syringe as disclosed in WO 2007/083522 A can be used. A temperature of the two liquids at the time of mixing is not particularly limited as long as each of the polymer units is dissolved and the respective liquids have fluidity. For example, the temperatures of the two liquids may be different from each other, but it is preferable that the temperatures are the same as each other so that the two liquids are easily mixed.

In some cases, as the container in the kit of the present invention, an instrument such as a nebulizer storing a polymer solution can be used. As the nebulizer, a known nebulizer known in the art can be appropriately used, and a medical nebulizer is preferable.

In addition, in another aspect, the present invention relates to a production method of the polymer material. The production method includes:

preparing a polymer solution by mixing a first polymer unit having a total of two or more boronic acid-containing groups at a terminal and a second polymer unit having a total of two or more polyol groups at a terminal with a solvent; and
adding a polymeric additive having neither a boronic acid-containing group nor a polyol group at a terminal so that the following relational expression is satisfied:

[Math. 9]

$$\log\left(\frac{c_2}{c_2\,*}\right) > 3\left(\log\left(\frac{c_1}{c_1\,*}\right) + 0.3\right)^2 - 1$$

in which a total concentration of the first and second polymer units in the polymer material is $c_1$, an overlapping concentration of the polymer units is $c_1*$, a concentration of the polymeric additive is $c_2$, and an overlapping concentration of the polymeric additive is $c_2*$.

The details of each polymer unit and the polymeric additive are as described above.

Examples

Hereinafter, the present invention will be described in more detail with reference to Examples, but the present invention is not limited to these Examples.

1.Preparation of polymer material

Tetra-PEG-GDL having a polyol group (ring-opened structure of gluconolactone) at a terminal of 4-branched tetrapolyethylene glycol and Tetra-PEG-FPBA having a fluorophenylboronic acid group at a terminal were synthesized

as polymer units constituting a polymer material.

The following raw materials were used. Tetra-PEG-$NH_2$ (molecular weights Mw of 5 k, 10 k, and 20 k were used; Yuka Sangyo Co., Ltd.); 4-carboxy-3-fluorophenylboronic acid (FPBA) (FUJIFILM Wako Pure Chemical Corporation); 4-(4,6-dimethoxy-1,3,5-triazin-2-yl)-4-methylmorpholinium chloride (DMT-MM) (FUJIFILM Wako Pure Chemical Corporation); and glucono-5-lactone (GDL) (Tokyo Chemical Industry Co., Ltd.).

Synthesis of Tetra-PEG-GDL

Tetra-PEG-$NH_2$ having an amino group at a terminal was dissolved in methanol at a concentration of 50 mg/mL, gluconolactone at a concentration of 10 times and triethylamine at a concentration of 20 times were added to the terminal amino group of Tetra-PEG-$NH_2$ in terms of molar ratio, and the mixture was stirred at 35°C for 3 days. The reaction solution was transferred to a dialysis membrane (in the case of 20 k, MWCO: 6-8,000, and in the cases of 10 k and 5 k, MWCO: 3,500), was dialyzed with methanol for 2 days and water for 2 days, and was passed through a 0.45 um syringe filter, and then the reaction solution was freeze-dried to be recovered as a powder. The completion of the synthesis was confirmed by $^1$H-NMR.

Synthesis of Tetra-PEG-FPBA

Tetra-PEG-$NH_2$ was dissolved in methanol at a concentration of 50 mg/mL, FPBA at a concentration of 5 times and DMT-MM at a concentration of 10 times were added to the terminal amino group of Tetra-PEG-$NH_2$ in terms of molar ratio, and the mixture was stirred at room temperature overnight. The reaction solution was transferred to a dialysis membrane (in the case of 20 k, MWCO: 6-8,000, and in the cases of 10 k and 5 k, MWCO: 3,500), was dialyzed for half a day with an aqueous hydrochloric acid solution (10 mM), half a day with an aqueous sodium hydroxide solution (10 mM), half a day with a phosphate buffer (pH 7.4, 10 mM), one day with saline (100 mM), and finally one day with pure water, and was passed through a 0.45 um syringe filter, and then the reaction solution was freeze-dried to be recovered as a powder. The completion of the synthesis was confirmed by $^1$H-NMR.

Various polymer units having a GDL terminal and FPBA were adjusted in the same manner using 2-branched PEG, 3-branched PEG, and 8-branched PEG as raw materials.

In addition, as a polymeric additive, commercially available unsubstituted linear polyethylene glycols (Mw = 10 k, 1,000 k, 8,000 k) (manufactured by FUJIFILM Wako Pure Chemical Corporation), linear polyvinyl alcohol (100 k) (manufactured by Kuraray Co., Ltd.), and linear sodium hyaluronate (2,500 k) (manufactured by SEIKAGAKU CORPORATION) were used.

Synthesis of polymer material

Solutions A and B containing the obtained polymer units and a solution C containing a polymeric additive were prepared under the following conditions, and these polymer solutions were mixed to synthesize a polymer material having the composition shown in the following table.

[Polymer solution A]
Concentration: 0.2 to 4 wt% Tetra-PEG-GDL (polyol terminal)
pH: 7.4
[Polymer solution B]
Concentration: 0.2 to 4 wt% Tetra-PEG-FPBA (boronic acid terminal)
pH: 7.4
[Polymer solution C]
Concentration: 0.0025 to 10 wt% of various polymeric additives
pH: 7.4

[Table 1]

| | Polyol terminal (weight average molecular weight) | Boronic acid terminal (weight average molecular weight) | Polymer content (g/L) | Additive polymer (weight average molecular weight) | Polymer content (g/L) |
|---|---|---|---|---|---|
| Example 1 | 4-Branched PEG (10 k) | 4-Branched PEG (10 k) | 2 to 40 | Linear PEG (10 k) | 4.0 to 100 |

(continued)

| | Polyol terminal (weight average molecular weight) | Boronic acid terminal (weight average molecular weight) | Polymer content (g/L) | Additive polymer (weight average molecular weight) | Polymer content (g/L) |
|---|---|---|---|---|---|
| Example 2 | 4-Branched PEG (10 k) | 4-Branched PEG (10 k) | 2 to 40 | Linear PEG (10 k) | 1 to 10 |
| Example 3 | 4-Branched PEG (10 k) | 4-Branched PEG (10 k) | 2 to 40 | Linear PEG (80 k) | 1 to 10 |
| Example 4 | 4-Branched PEG (10 k) | 4-Branched PEG (10 k) | 20 | Linear PVA (10 k) | 0.1, 50 |
| Example 5 | 4-Branched PEG (10 k) | 4-Branched PEG (10 k) | 20 | Linear sodium hyaluronate (2,500 k) | 0.025, 5. 0 |

2. Evaluation of phase-separated structure

Fig. 1 illustrates a plot of results of confirming the presence or absence of formation of a phase-separated structure for the various polymer materials synthesized in 1. above. Here, for confirmation of formation of a phase-separated structure, a sample subjected to fluorescence modification such as fluorescein was observed with a confocal laser microscope (LSM800, manufactured by Zeiss AG) at an excitation wavelength of 498 nm and an observation wavelength of 598 nm, and a sample in which structures (that is, structures indicated by different colors on the acquired image) of 5 um or more were confirmed was identified as a phase-separated structure (Fig. 2).

Synthesis of fluorescence-modified sample

Tetra-PEG-$NH_2$ (molecular weights Mw of 5 k, 10 k, and 20 k were used; Yuka Sangyo Co., Ltd.) was dissolved in methanol at a concentration of 50 mg/ml and was allowed to react with fluorescein isothiocyanate (FITC) (manufactured by Sigma Aldrich) at a concentration of 0.001 times at an $NH_2$ terminal, and the mixture was stirred at 25°C for 1 day. Thereafter, gluconolactone at a concentration of 10 times and 20 equivalents of triethylamine were added to the $NH_2$ terminal, and the mixture was stirred at 35°C for 3 days. The reaction solution was transferred to a dialysis membrane (in the case of 20 k, MWCO: 6-8,000, and in the cases of 10 k and 5 k, MWCO: 3,500), and was dialyzed with each of methanol and deionized water for 1 day, and the dialyzed reaction solution was filtered using a 0.45 um syringe filter. Thereafter, the reaction solution was freeze-dried to recover the reaction product as a solid.

The obtained fluorescence-modified Tetra-PEG-GDL, the Tetra-PEG-FPBA synthesized in 1. above, and the polymeric additive were mixed to obtain a fluorescence-modified sample. It was confirmed that there was almost no change in physical properties due to the fluorescence modification.

In Fig. 1, the horizontal axis represents the total concentration ($c_1$) of the first and second polymer units/the overlapping concentration ($c_1$*) of the polymer units, and the vertical axis represents the concentration ($c_2$) of the added polymeric additive/the overlapping concentration ($c_2$*) of the polymeric additive. The results of mixing linear PEG with slime (o: phase-separated structure formation, ×: single phase without phase separation) (Examples 1 to 3), the results of mixing linear polyvinyl alcohol with slime (□: phase-separated structure formation, +: single phase without phase separation) (Example 4), and the results of mixing linear hyaluronic acid with slime (●: phase-separated structure formation, +: single phase without phase separation) (Example 5) were illustrated.

As a result of linear regression analysis on the plot of Fig. 1, it was found that a phase-separated structure was obtained when the following expression with the total concentration ($c_1$) of the polymer units and the concentration ($c_2$) of the polymeric additive as variables was satisfied.

$$\log\left(\frac{c_2}{c_2*}\right) > 3\left(\log\left(\frac{c_1}{c_1*}\right) + 0.3\right)^2 - 1$$

3. Viscosity measurement

In addition, a constant viscosity change of the polymer material of Example 3 was measured at a strain rate of 0.001-100 $s^{-1}$. The results thereof are illustrated in Fig. 3. As illustrated in Fig. 3, in the polymer material (o) containing no polymeric additive, the viscosity was attenuated after taking a constant value up to about 1 $s^{-1}$ with respect to the

strain rate (γ). On the other hand, it was found that the polymer material (●, ▲, and □) of the polymer material of Example 3 exhibited a behavior of so-called "shear thinning" in which the viscosity was already attenuated from a low strain rate region at around $10^{-2}$ $s^{-1}$ and had an excellent flow softening property.

## Claims

1. A non-gelled polymer material comprising a solvent,

   wherein the polymer material has a three-dimensional structure in which a first region in which a plurality of polymer units are densely present by linking the plurality of polymer units and a second region in which the polymer units are sparsely present are present in a phase-separated state,
   the polymer units include a first polymer unit having a total of two or more boronic acid-containing groups at a terminal and a second polymer unit having a total of two or more polyol groups at a terminal,
   the polymer material further contains a polymeric additive having neither a boronic acid-containing group nor a polyol group at a terminal,
   a total concentration ($c_1$) of the first and second polymer units in the polymer material is 1 to 200 g/L, and an overlapping concentration ($c_1$*) of the polymer units is in a range of 0.02 to 5 times, and
   a concentration ($c_2$) of the polymeric additive in the polymer material satisfies the following relational expression with respect to an overlapping concentration ($c_2$*) of the polymeric additive:

   [Math. 1]

$$\log\left(\frac{c_2}{c_2*}\right) > 3\left(\log\left(\frac{c_1}{c_1*}\right) + 0.3\right)^2 - 1$$

2. The polymer material according to claim 1, wherein the solvent is water and the polymer unit is a hydrophilic polymer.

3. The polymer material according to claim 1, wherein the polymer unit has a polyethylene glycol skeleton or a polyvinyl skeleton.

4. The polymer material according to claim 1, wherein the polymer units are each independently a 2-branched, 3-branched, 4-branched, or 8-branched polyethylene glycol.

5. The polymer material according to claim 1, wherein the polymer unit has a molecular weight (Mw) of $5 \times 10^3$ to $1 \times 10^5$.

6. The polymer material according to claim 1, wherein the boronic acid-containing group is an aryl boronic acid which may be substituted with a halogen atom.

7. The polymer material according to claim 1, wherein the polyol group has a ring-opened structure of a sugar derivative.

8. The polymer material according to claim 1, wherein the polymeric additive is a hydrophilic polymer or a biopolymer.

9. The polymer material according to claim 1, wherein the polymeric additive has a polyethylene glycol skeleton or a polyvinyl skeleton.

10. The polymer material according to claim 1, wherein the polymeric additive is a polymer having the same type of main chain skeleton as the polymer unit.

11. The polymer material according to claim 1, wherein the polymeric additive has a molecular weight (Mw) of $1 \times 10^3$ to $1 \times 10^8$.

12. A kit for forming the polymer material according to any one of claims 1 to 11, the kit comprising

   at least a container separately storing a solution A containing a first polymer unit having a total of two or more boronic acid-containing groups at a terminal and a solution B containing a second polymer unit having a total

of two or more polyol groups at a terminal,

wherein the kit further includes a polymeric additive having neither a boronic acid-containing group nor a polyol group at a terminal in at least one of the solutions A and B, or the kit further includes a container separately storing a solution C containing the polymeric additive,

a total concentration ($c_1$) of the first and second polymer units in a solution in which the solutions A and B (and the solution C, when present) are mixed is 1 to 200 g/L, and an overlapping concentration ($c_1$*) of the polymer units is in a range of 0.02 to 5 times, and

a concentration ($c_2$) of the polymeric additive in the solution in which the solutions A and B (and the solution C, when present) are mixed satisfies the following relational expression with respect to an overlapping concentration ($c_2$*) of the polymeric additive:

[Math. 2]

$$\log\left(\frac{c_2}{c_2\,*}\right) > 3\left(\log\left(\frac{c_1}{c_1\,*}\right) + 0.3\right)^2 - 1$$

**13.** A production method of the polymer material according to any one of claims 1 to 11, the production method comprising:

preparing a polymer solution by mixing a first polymer unit having a total of two or more boronic acid-containing groups at a terminal and a second polymer unit having a total of two or more polyol groups at a terminal with a solvent; and

adding a polymeric additive having neither a boronic acid-containing group nor a polyol group at a terminal so that the following relational expression is satisfied:

[Math. 3]

$$\log\left(\frac{c_2}{c_2\,*}\right) > 3\left(\log\left(\frac{c_1}{c_1\,*}\right) + 0.3\right)^2 - 1$$

in which a total concentration of the first and second polymer units in the polymer material is $c_1$, an overlapping concentration of the polymer units is $c_1$*, a concentration of the polymeric additive is $c_2$, and an overlapping concentration of the polymeric additive is $c_2$*.

*FIG. 1*

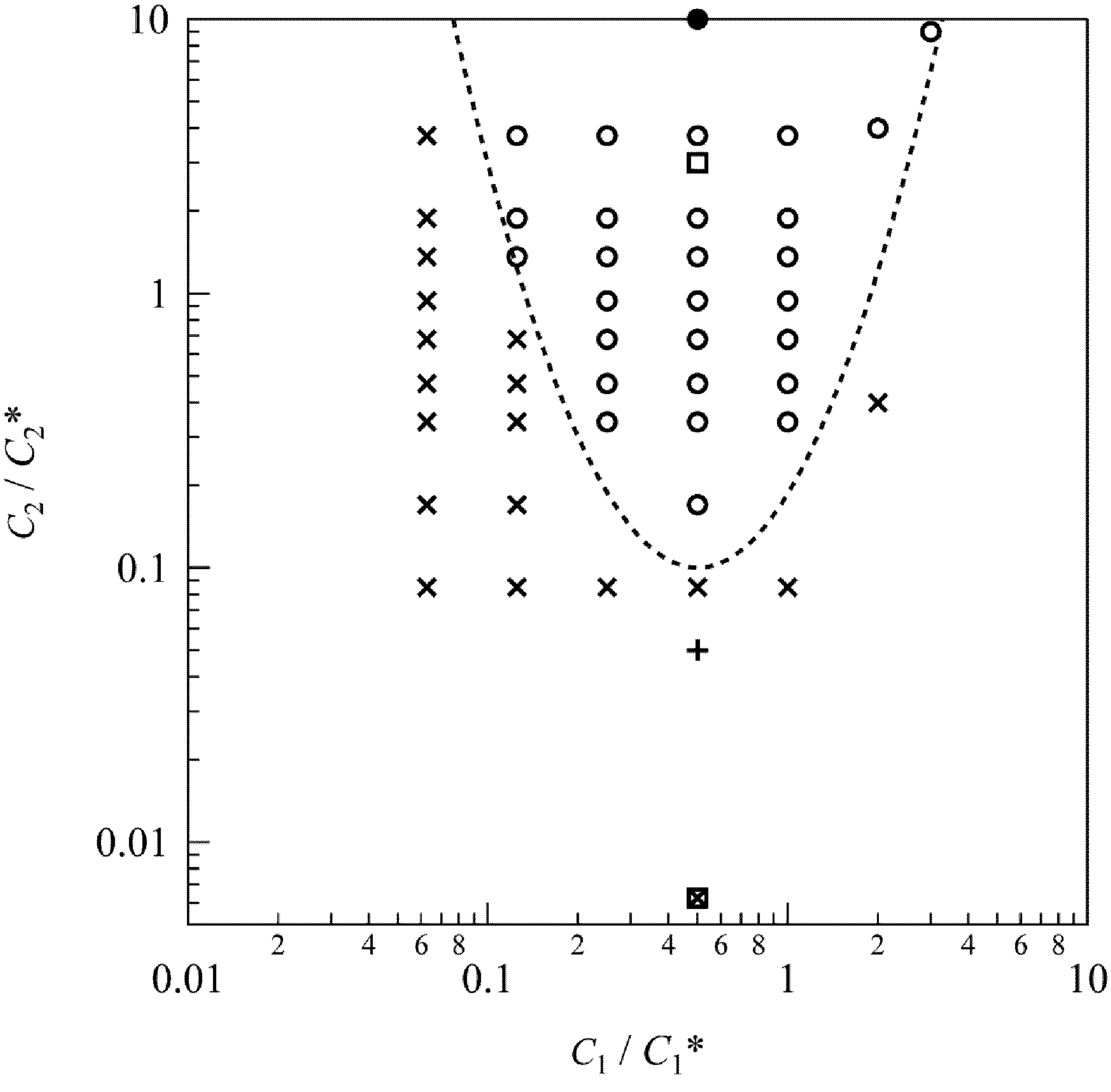

FIG. 2

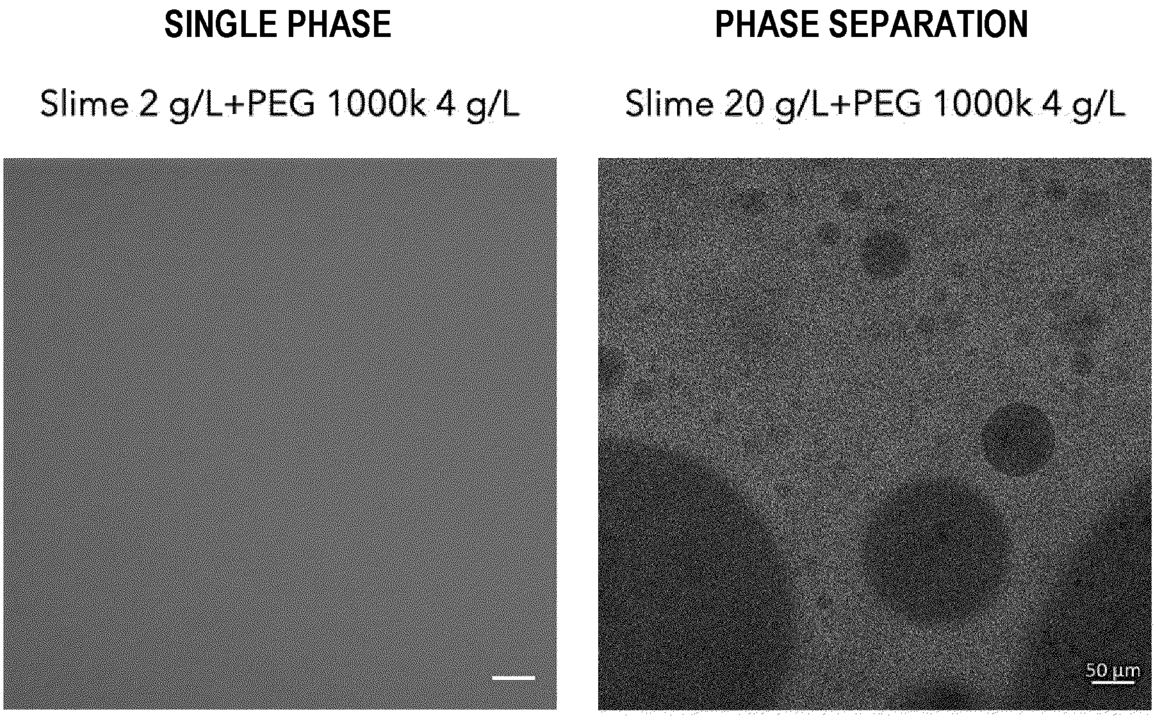
SINGLE PHASE
Slime 2 g/L+PEG 1000k 4 g/L
PHASE SEPARATION
Slime 20 g/L+PEG 1000k 4 g/L
50 µm

FIG. 3

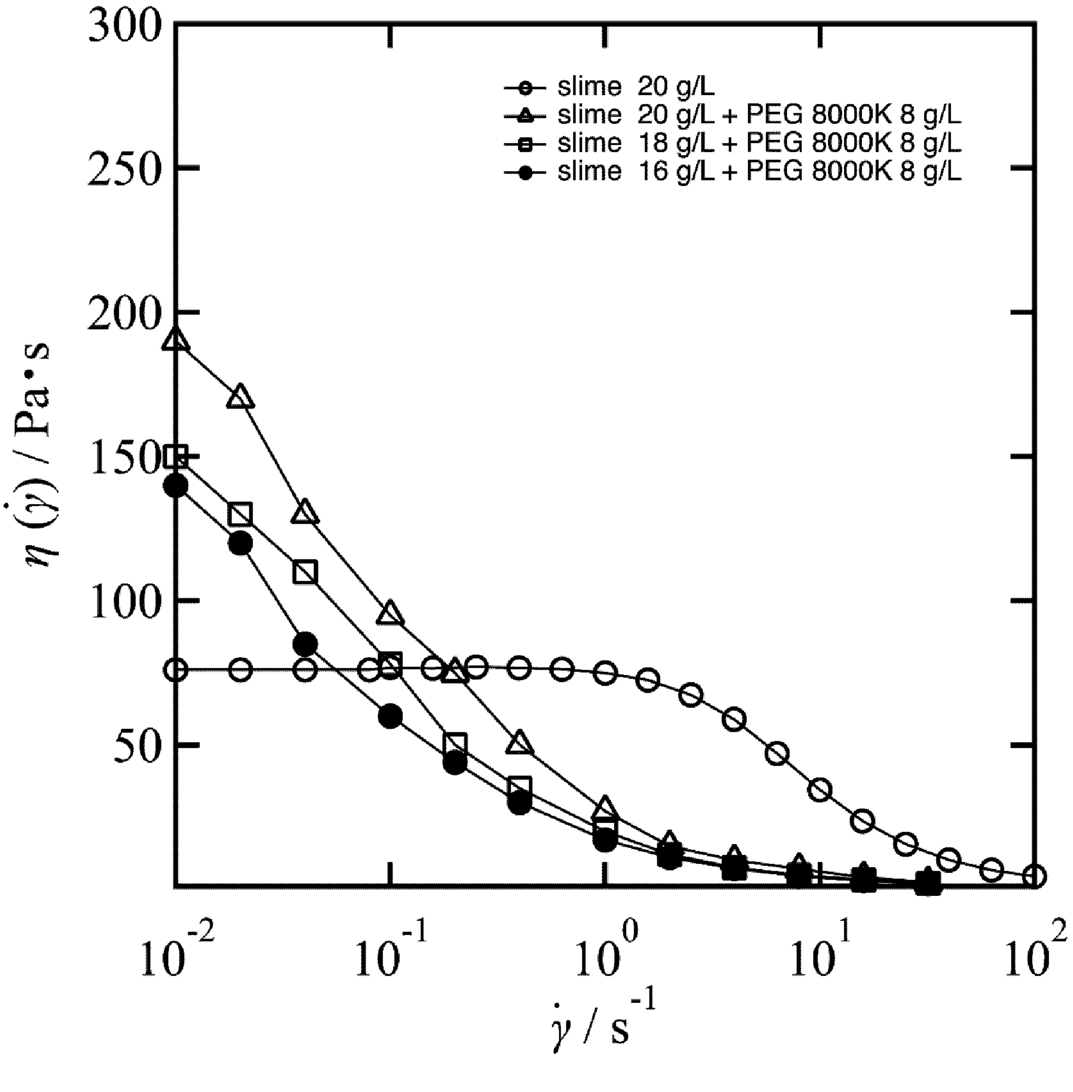
300
250
200
150
100
50
slime 20 g/L
slime 20 g/L + PEG 8000K 8 g/L
slime 18 g/L + PEG 8000K 8 g/L
slime 16 g/L + PEG 8000K 8 g/L
$\eta(\dot{\gamma})$ / Pa•s
$10^{-2}$
$10^{-1}$
$10^{0}$
$10^{1}$
$10^{2}$
$\dot{\gamma}$ / $s^{-1}$

## INTERNATIONAL SEARCH REPORT

International application No.
**PCT/JP2023/016922**

**A. CLASSIFICATION OF SUBJECT MATTER**

***C08L 101/02***(2006.01)i; ***C08G 81/00***(2006.01)i
FI: C08L101/02; C08G81/00

According to International Patent Classification (IPC) or to both national classification and IPC

**B. FIELDS SEARCHED**

Minimum documentation searched (classification system followed by classification symbols)

C08L101/02; C08G81/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2012-500208 A (CALIFORNIA INSTITUTE OF TECHNOLOGY) 05 January 2012 (2012-01-05)<br>entire text | 1-13 |
| A | CN 109575269 A (TSINGHUA UNIVERSITY) 05 April 2019 (2019-04-05)<br>entire text | 1-13 |
| A | CN 109721744 A (TSINGHUA UNIVERSITY) 07 May 2019 (2019-05-07)<br>entire text | 1-13 |
| A | CN 111138687 A (CHINA PHARMACEUTICAL UNIVERSITY) 12 May 2020 (2020-05-12)<br>entire text | 1-13 |
| A | CN 112851983 A (DONGHUA UNIVERSITY) 28 May 2021 (2021-05-28)<br>entire text | 1-13 |
| P, A | WO 2022/092043 A1 (UNIV TOKYO) 05 May 2022 (2022-05-05)<br>entire text | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2023/016922**

| Patent document cited in search report | Publication date (day/month/year) | Patent family member(s) | Publication date (day/month/year) |
|---|---|---|---|
| JP 2012-500208 A | 05 January 2012 | US 2010/0040556 A1<br>entire text<br>WO 2010/019718 A2<br>CN 102123698 A<br>KR 10-2011-0045031 A | |
| CN 109575269 A | 05 April 2019 | (Family: none) | |
| CN 109721744 A | 07 May 2019 | (Family: none) | |
| CN 111138687 A | 12 May 2020 | (Family: none) | |
| CN 112851983 A | 28 May 2021 | (Family: none) | |
| WO 2022/092043 A1 | 05 May 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007083522 A


### Non-patent literature cited in the description


- **RAINER G et al.** *Br J Ophthalmol,* 2001, vol. 85, 139-142
- **OOKI T et al.** *Developmental Cell,* 2019, vol. 49, 590-604
- **MATSUNAGA et al.** *Macromolecules,* 2009, vol. 42 (4), 1344-1351